Europäisches Patentamt

European Patent Office

Office européen des brevets

(19)

(11) Veröffentlichungsnummer: **0 176 767**
**B1**

(12) # EUROPÄISCHE PATENTSCHRIFT

(45) Veröffentlichungstag der Patentschrift:
09.03.88

(21) Anmeldenummer: 85110859.7

(22) Anmeldetag: 29.08.85

(51) Int. Cl.⁴: **F 16 D 41/06**

(54) **Kunststoffkäfig für einen Klemmrollenfreilauf.**

(30) Priorität: 20.09.84 DE 3434499

(43) Veröffentlichungstag der Anmeldung:
09.04.86 Patentblatt 86/15

(45) Bekanntmachung des Hinweises auf die Patenterteilung:
09.03.88 Patentblatt 88/10

(84) Benannte Vertragsstaaten:
DE FR GB IT

(56) Entgegenhaltungen:
DE - A - 1 625 743
DE - B - 1 258 207
US - A - 3 339 687
US - A - 3 537 554
US - A - 3 863 742
US - A - 3 937 312
US - A - 3 993 177

(73) Patentinhaber: INA Wälzlager Schaeffler KG,
Industriestrasse 1-3, D-8522 Herzogenaurach (DE)

(72) Erfinder: Stark, Johann, Dipl.-Ing. (FH), Biengarten 3,
D-8552 Höchstadt (DE)
Erfinder: Müntnich, Leo, Schulstrasse 6,
D-8521 Aurachtal (DE)

### Beschreibung

Die Erfindung betrifft einen Kunststoffkäfig für einen Klemmrollenfreilauf, bei dem die Klemmrollen in Käfigfenstern aufgenommen sind, die von an wenigstens einem Ende mit einem Bordring versehenen Stegen begrenzt sind, wobei jeder Klemmrolle ein in tangentialer Richtung gegenüber einem benachbarten Steg geringfügig geneigtes, einstückig angeformtes blattfederartiges Federelement zugeordnet ist.

Ein derartiger Kunststoffkäfig ist durch die US-A-3 937 312 bereits bekannt. Die einstückig angespritzten Federelemente beanspruchen jedoch dann, wenn eine ausreichende Nachgiebigkeit in Umfangsrichtung erzielt werden soll, einen relativ grossen Einbauraum, so dass sich die Anzahl der unterzubringenden Klemmrollen verringert. Dadurch wird aber die Belastbarkeit eines solchen Klemmrollenfreilaufs erheblich eingeschränkt. Dieser Mangel macht sich insbesondere dann in verstärktem Masse bemerkbar, wenn es sich um sehr kleine Klemmrollenfreiläufe handelt, da dann nur noch so wenig Klemmrollen im Käfig aufgenommen werden können, dass das zu übertragende Drehmoment unzureichend ist.

Der Erfindung liegt deshalb die Aufgabe zugrunde, einen Kunststoffkäfig für einen solchen Klemmrollenfreilauf in einfacher und fortschrittlicher Weise so auszubilden, dass auch auf kleinstem Bauraum eine ausreichende Anzahl von Klemmrollen untergebracht werden kann, und trotzdem jede Klemmrolle mit einem separaten Federelement angefedert ist.

Erfindungsgemäss wird diese Aufgabe dadurch gelöst, dass sich das Federelement und der angrenzende Steg jeweils nur über einen Teil der radialen Höhe des Bordringes erstrecken, wobei das Federelement radial versetzt zum Steg in einer solchen Position am Bordring angeordnet ist, dass das Federelement den angrenzenden Steg in Umfangsrichtung frei beweglich überdeckt. Durch die erfindungsgemässe Ausbildung ergibt sich der Vorteil, dass die Nachgiebigkeit des Federelementes beträchtlich erhöht wird, ohne dass hierfür zusätzlicher Einbauraum benötigt wird. Dadurch lässt sich die Anzahl der Klemmrollen erhöhen und trotzdem das gewünschte niedrige Leerlaufreibungsmoment erzielen.

Nach einer Ausführungsform der Erfindung ist vorgesehen, dass die radiale Höhe des Federelements etwa der halben radialen Höhe des Bordringes entspricht. Durch diese Massnahme ist einerseits dafür Sorge getragen, dass der Kunststoffkäfig selbst noch eine ausreichende Festigkeit aufweist und andererseits das Federelement die erforderliche Elastizität und Standfestigkeit besitzt.

Nach einer bevorzugten Ausführungsform der Erfindung ist vorgesehen, dass das Federelement an seinem freien Ende einen den Klemmrollen zugewandten entgegengesetzt abgewinkelten, federelastischen Lappen aufweist. Dadurch wird die Nachgiebigkeit des Federelements in Umfangsrichtung mit einfachen Mitteln weiter erhöht.

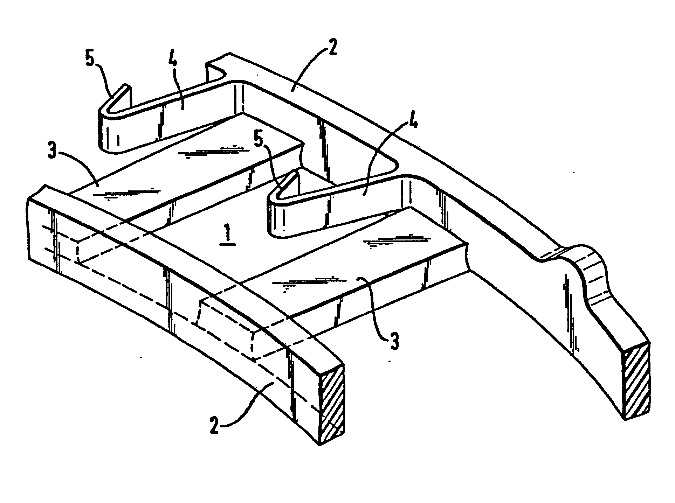

Ein Ausführungsbeispiel der Erfindung ist in der Zeichnung anhand eines perspektivischen Käfigabschnittes in stark vergrössertem Massstab dargestellt und wird nachfolgend näher beschrieben.

Der Kunststoffkäfig weist Käfigfenster 1 auf, die von den durch die Bordringe 2 verbundenen Stegen 3 begrenzt sind. In jedem Käfigfenster 1 ist eine nicht dargestellte Klemmrolle aufgenommen, von denen jeder ein in tangentialer Richtung gegenüber dem benachbarten Steg 3 geringfügig geneigtes, einstückig angeformtes blattfederartiges Federelement 4 zugeordnet ist, das sich ebenso wie der angrenzende Steg 3 jeweils nur über einen Teil der radialen Höhe der Bordringe 2 erstreckt.

Das Federelement 4 ist radial versetzt zum Steg 3 in einer solchen Position an einem der Bordringe 2 angeordnet, dass es den angrenzenden Steg 3 bei eingesetzter Klemmrolle in Umfangsrichtung frei beweglich überdeckt, wobei die radiale Höhe des Federelementes 4 etwa der halben radialen Höhe der Bordringe 2 entspricht. An seinem freien Ende weist das Federelement 4 einen den nicht dargestellten Klemmrollen zugewandten entgegengesetzt abgewinkelten, federelastischen Lappen 5 auf.

Die Ausbildung des blattfederartigen Federelementes ist nicht auf die in der Zeichnung dargestellte Ausführungsform beschränkt, vielmehr ist im Rahmen der Erfindung jede beliebige Querschnittsform des Federelementes, wie z.B. trapez- oder kreisbogenförmig denkbar.

### Patentansprüche

1. Kunststoffkäfig für einen Klemmrollenfreilauf, bei dem die Klemmrollen in Käfigfenstern (1) aufgenommen sind, die von an wenigstens einem Ende mit einem Bordring (2) versehenen Stegen (3) begrenzt sind, wobei jeder Klemmrolle ein in tangentialer Richtung gegenüber einem benachbarten Steg (3) geringfügig geneigtes, einstückig angeformtes blattfederartiges Federelement (4) zugeordnet ist, dadurch gekennzeichnet, dass sich das Federelement (4) und der angrenzende Steg (3) jeweils nur über einen Teil der radialen Höhe des Bordringes (2) erstrecken, wobei das Federelement (4) radial versetzt zum Steg (3) in einer solchen Position am Bordring (2) angeordnet ist, dass das Federelement (4) den angrenzenden Steg (3) in Umfangsrichtung frei beweglich überdeckt.

2. Kunststoffkäfig nach Anspruch 1, dadurch gekennzeichnet, dass die radiale Höhe des Federelementes (4) etwa der halben radialen Höhe des Bordringes (2) entspricht.

3. Kunststoffkäfig nach Anspruch 1 oder 2, dadurch gekennzeichnet, dass das Federelement (4) an seinem freien Ende einen den Klemmrollen zugewandten entgegengesetzt abgewinkelten, federelastischen Lappen (5) aufweist.

### Claims

1. Plastics cage for a wedging roller free wheel in which the wedging rollers are received in cage windows (1) which are delimited at at least one end by webs (3) provided with a rim ring (2), wherein each wedging roller is associated with a unitarily formed leaf spring-like spring element (4) slightly inclined in tangential direction relative to an adjoining web (3), characterised in that the spring element (4) and the adjoining web (3) each extend only over a part of the radial height of the rim ring (2), the spring element (4) being arranged radially displaced relative to the web (3) in such a position on the rim ring (2) that the spring element (4) freely movably overlaps the adjoining web (3) in the circumferential direction.

2. Plastics cage according to claim 1, characterised in that the radial height of the spring element (4) corresponds approximately to half the radial height of the rim ring (2).

3. Plastics cage according to claim 1 or 2, characterised in that the spring element (4) comprises at its free end a bent back, resilient tongue (5) facing towards the wedging roller.

## Revendications

1. Cage en matière plastique pour roue libre à rouleaux de coincement dans laquelle les rouleaux de coincement sont logés dans des fenêtres (1) de la cage qui sont délimitées par des entretoises (3) comportant, au moins à une extrémité, un anneau de bordure (2), un élément élastique (4) du type ressort à lame, formé d'un seul tenant, légèrement incliné en direction tangentielle par rapport à une entretoise (3) voisine, correspondant à chaque rouleau de coincement, caractérisé en ce que l'élément élastique (4) et l'entretoise (3) contiguë s'étendent dans chaque cas seulement sur une partie de la hauteur radiale de l'anneau de bordure (2), l'élément élastique (4) étant disposé avec un décalage radial par rapport à l'entretoise (3) dans une position telle sur l'anneau de bordure (2) que l'élément élastique (4) chevauche l'entretoise (3) contiguë d'une façon permettant un mouvement libre en direction périphérique.

2. Cage en matière plastique selon la revendication 1, caractérisé en ce que la hauteur radiale de l'élément élastique (4) correspond sensiblement à la moitié de la hauteur radiale de l'anneau de bordure (2).

3. Cage en matière plastique selon la revendication 1 ou 2, caractérisée en ce que l'élément élastique (4) comporte à son extrémité libre une languette élastique (5) faisant ressort, située du côté des rouleaux de coincement, coudée en sens opposé.

0 176 767